Europäisches Patentamt

(19) European Patent Office

Office européen des brevets

(11) Numéro de publication : **0 200 589**

**B1**

(12) **FASCICULE DE BREVET EUROPÉEN**

(45) Date de publication du fascicule du brevet :
13.12.89

(21) Numéro de dépôt : 86400612.7

(22) Date de dépôt : 24.03.86

(51) Int. Cl.⁴ : **C 08 G 18/81, C 09 J 3/16, B 32 B 17/10, C 09 J 3/14**

(54) **Couche adhésive utilisée dans la fabrication de vitrages feuilletés et vitrages feuilletés comprenant une telle couche.**

(30) Priorité : 28.03.85 FR 8504646

(43) Date de publication de la demande :
05.11.86 Bulletin 86/45

(45) Mention de la délivrance du brevet :
13.12.89 Bulletin 89/50

(84) Etats contractants désignés :
AT BE CH DE FR GB IT LI NL SE

(56) Documents cités :
US--A-- 3 580 796
US--A-- 4 233 425
US--A-- 4 320 221
US--A-- 4 451 627

(73) Titulaire : SAINT-GOBAIN VITRAGE
"Les Miroirs" 18, avenue d'Alsace
F-92400 Courbevoie (FR)

(72) Inventeur : Bravet, Jean-Louis
5, Avenue du Moulin
F-60150 Thourotte (FR)
Inventeur : Daude, Gérard
11, Rue René Voisin
F-33140 Villeneuve D'Ornon (FR)

(74) Mandataire : Muller, René et al
SAINT-GOBAIN RECHERCHE 39, quai Lucien Lefranc
F-93304 Aubervilliers (FR)

## Description

La présente invention concerne la fabrication de vitrages feuilletés en verre et/ou en matière plastique tels des vitrages feuilletés de grandes dimensions comme des vitrages automobiles, de bâtiments et de plus petites dimensions tels les masques, écrans, lunettes, etc... Plus particulièrement, l'invention concerne une nouvelle couche adhésive utilisée dans la fabrication de tels vitrages feuilletés. Elle concerne encore les vitrages feuilletés comprenant cette couche adhésive.

L'utilisation d'une couche de polyuréthane en tant que couche adhésive dans les vitrages feuilletés est connue et décrite dans de nombreuses publications de brevets. Cette couche peut remplir la seule fonction de collage. Elle peut tenir en outre un rôle d'absorbeur d'énergie.

Cette couche adhésive peut être utilisée pour assembler des feuilles de substances diverses en verre et/ou en matières plastiques.

Par exemple dans la publication de brevet français 2 398 606, on décrit l'utilisation d'une couche de polyuréthane thermoplastique pour l'adhésion avec un support en verre ou en matière plastique d'une couche de matière plastique autocicatrisable, c'est-à-dire une couche de laquelle les impressions locales disparaissent spontanément après un court laps de temps, de l'ordre de quelques minutes, cette vitesse de disparition étant fonction de la nature de l'impression et de la température de la matière plastique. En même temps, cette couche peut être antilacérante, c'est-à-dire qu'en cas de bris d'un vitrage en verre, la couche recouvre les arêtes vives du verre et protège la face, les yeux ou d'autres parties du corps des passagers d'un véhicule par exemple, ou encore lorsqu'il s'agit de lunettes de sécurité, la couche de protection peut éviter le contact des arêtes vives avec les yeux.

L'assemblage de la couche de matière plastique autocicatrisable et antilacérante avec le support par l'intermédiaire de la couche thermoplastique s'effectue à l'aide de la chaleur et de la pression, par exemple en soumettant le feuilleté à un cycle d'autoclave.

Dans la publication de brevet européen 0 032 329, on décrit l'utilisation d'une couche adhésive à base d'un polyuréthane thermoplastique contenant un agent de blocage. Là encore, lorsqu'on utilise cette couche pour fabriquer des vitrages feuilletés, notamment pour associer la couche de matière plastique autocicatrisable et antilacérante à un support rigide, il faut utiliser la chaleur et la pression, par exemple en soumettant l'ensemble à un cycle d'autoclave à une température supérieure à 110 °C.

En outre, dans cet art antérieur, la fabrication de la couche adhésive nécessite l'utilisation de la chaleur pour la polymérisation du polyuréthane.

On connaît aussi d'après les publications de brevets US-A-4 451 627 et US-A-4 320 221 des compositions adhésives formées d'un composé isocyanate, d'un composé à hydrogènes actifs et d'un catalyseur, au moins un des composés ayant une double liaison éthylénique. Ces compositions adhésives ne conviennent pas à la réalisation d'une couche transparente, de haute qualité optique utilisable dans les vitrages feuilletés. D'une part, la couche fabriquée à partir de ces compositions présente un poisseux et un collant qui lui interdit d'être manipulée dans les ateliers de fabrication des vitrages feuilletés. D'autre part, la couche fabriquée à partir de ces compositions ne présente pas une cohésion suffisante et donc la qualité optique nécessaire à son utilisation dans les vitrages feuilletés.

L'invention propose l'utilisation dans la fabrication des vitrages feuilletés d'une couche adhésive formée à partir d'une composition adhésive polymérisable à froid, c'est-à-dire à une température généralement inférieure à 80 °C. La couche adhésive utilisée selon l'invention comprend un polyuréthane formé à partir d'un composant isocyanate comprenant au moins un monoisocyanate présentant une double liaison éthylénique dans sa formule et au moins un diisocyanate aliphatique ou cycloaliphatique, un composant polyol comprenant au moins un polyol choisi parmi les polyétherpolyols ou les polyesterpolyols de masse moléculaire comprise entre 450 et 2 000, les polycaprolactones de masse moléculaire comprise entre 500 et 2 000, des polycarbonatepolyols et polyestercarbonatepolyols de masse moléculaire comprise entre 1 000 et 2 000, des polybutadiènes à fonction hydroxyle ou carboxyle, éventuellement au moins un diol court de masse moléculaire comprise entre 50 et 200, éventuellement au moins un agent réticulant de fonctionnalité supérieure à 2 tel un triol de masse moléculaire comprise entre 100 et 3 000, et au moins un initiateur de polymérisation.

En tant que mono-isocyanate présentant une double liaison éthylénique, on utilise avantageusement le méta-isopropenyl-α,α-diméthylbenzylisocyanate (m. TMI) ou l'isocyanatoéthylméthacrylate (I.E.M).

En tant que diisocyanate aliphatiques ou cycloaliphatiques, on peut choisir : le 1,6-hexanediisocyanate, le 2,2,4-triméthyl-1,6-hexanediisocyanate, le 2,4-4-triméthyl-1,6-hexanediisocyanate, le 1,3-bis (isocyanatométhyl) benzène, le bis-(4-isocyanatocyclohexyl) méthane, le bis-(3-méthyl-4-isocyanatocyclohexyl) méthane, le 2,2-bis-(4-isocyanatocyclohexyl) propane et le 3-isocyanatométhyl-3,5,5-triméthylcyclohexylisocyanate, le p-phénylénediisocyanate et p-cyclohexyldiisocyanate.

Dans une variante, la couche adhésive selon l'invention comprend un polyuréthane formé à partir d'une composition comprenant (a) un composant isocyanate comprenant au moins un mono-isocyanate présentant une double liaison éthylénique dans sa formule, (b) un composant polyol comprenant au moins un polyol choisi parmi les polyétherpolyols ou les polyesterpolyols de masse moléculaire comprise entre 450 et 2 000, les polycaprolactones de masse moléculaire comprise entre 500 et 2 000, les polycarbonatepolyols et les polyesterpolycarbonatepolyols de masse moléculaire comprise entre 1 000 et 2 000, des polybutadiènes à fonction hydroxyle ou carboxyle, les polyols de fonctionnalité supérieure à 2 tels les triols de masse moléculaire comprise entre 100 et 3 000, le composant polyol comprenant éventuellement en outre au moins un diol court de masse moléculaire comprise entre 50 et 200, (c) un dérivé acrylique choisi parmi l'acrylate d'hydroxyéthyle, le triméthylolpropanetriacrylate, le triméthylolpropanetriméthacrylate, l'acrylate d'éthyl-2-hexyle, l'acrylate de butyle et de méthyle, et (d) au moins un initiateur de polymérisation.

On utilise par exemple en tant que polyols des polyols obtenus par réaction d'alcools polyfonctionnels avec des diacides aliphatiques ou des éthers cycliques. Les alcools polyfonctionnels sont par exemple le 1,2-éthanediol (éthylèneglycol), le 1,2-propanediol, le 1,3-propanediol, le 1,2-butanediol, le 1,4-butanediol, le 2,2-diméthyl-1,3-propanediol (néopentylglycol), le 1,6-hexanediol, le 2-méthyl-2,4-pentanediol, le 3-méthyl-2,4-pentanediol, le 2-éthyl-1,3-hexanediol, le 2,2,4-triméthyl-1,3-pentanediol, le diéthylèneglycol, le triéthylèneglycol, les polyéthylèneglycols, le dipropylèneglycol, le tripropylèneglycol, les polypropylèneglycols ou le 2,2-bis (hydroxyméthyl) 1-1-propanol (triméthyloléthane), le 2,2-bis (hydroxyméthyl)-1-butanol (triméthylolpropane), le 1,2,4-butanetriol, le 1,2,6-hexanetriol, le 2,2-bis (hydroxyméthyl)-1,3-propanediol (pentaérythritol) et le 1,2,3,4,5,6-hexanehexol (sorbitol), le cyclohexanediméthanol.

Les diacides aliphatiques sont par exemple l'acide malonique, l'acide succinique, l'acide glutarique, l'acide adipique, l'acide subérique, et l'acide sébacique.

L'initiateur de polymérisation peut être choisi parmi les photo-initiateurs lorsque la polymérisation de la couche est effectuée sous un rayonnement ultra-violet ou sous un rayonnement d'électrons. Ce peut être ainsi un dérivé radicalaire susceptible de former des radicaux libres sous l'effet d'une température relativement basse, par exemple de l'ordre de 60 °C. En tant que photo-initiateur, on peut citer la benzophénone, l'acétophénone, l'éther isobutylique de la benzoïne. La couche adhésive peut être formée in situ sur un des éléments à assembler. Cette couche adhésive peut encore être formée sur un support auquel elle n'adhère pas fortement, pour former une feuille que l'on détache dudit support de coulée, et qu'on intercale entre les éléments à assembler.

Lorsqu'on forme la couche directement sur un des éléments à assembler, on associe de préférence l'autre élément avant la polymérisation totale du polyuréthane.

Lorsque la couche adhésive est utilisée pour l'assemblage de la couche de matière plastique présentant des propriétés d'antilacération et d'autocicatrisation déjà citées avec un support monolithe ou feuilleté, en verre ou en matière plastique, on peut avantageusement fabriquer au préalable une feuille à deux couches de la façon suivante.

On fabrique tout d'abord la couche de matière plastique antilacérante et autocicatrisable formée notamment d'un polyuréthane thermodurcissable, et sur cette première couche, on forme la deuxième couche.

On peut ainsi fabriquer tout d'abord une couche de polyuréthane thermodurcissable par coulée du mélange des composants sur un support de coulée. Après polymérisation des monomères et formation d'une couche thermodurcissable d'épaisseur pouvant varier entre 0,2 et 0,8 mm, on coule la composition réactionnelle apte à former la couche adhésive. La couche de colle peut avoir une épaisseur comprise entre 0,01 et 1 mm selon l'application désirée. La feuille est ensuite détachée du support avant polymérisation de la couche adhésive, pour être associée à un substrat en verre ou en matière plastique. Le collage des éléments est réalisé en même temps que la polymérisation de la couche adhésive, par un traitement aux U.V. ou équivalent, au cas où la couche adhésive contient un initiateur sensible aux U.V., ou par un traitement thermique limité au cas où la couche adhésive contient un initiateur du type dérivé radicalaire.

Lorsque la couche adhésive est utilisée pour l'assemblage de la feuille à deux couches décrite dans la publication de brevet européen 0 133 090, on peut opérer de la même façon, en formant d'abord les deux couches constitutives de la feuille puis la couche adhésive.

On peut ainsi fabriquer des vitrages de sécurité tels que des vitrages automobiles, notamment des pare-brises, des vitrages de bâtiments, des lunettes de protection, etc...

Dans une variante, on peut effectuer la polymérisation de la couche adhésive avant l'assemblage avec les autres éléments du vitrage, alors qu'elle est par exemple encore sur le support de formation de la feuille. A ce moment, la feuille est traitée de façon convenable par exemple par passage sous un rayonnement U.V.

La couche adhésive peut être formée par coulée du mélange des composants sur un support ou comme indiqué précédemment, sur un des éléments à assembler ou le cas échéant sur les deux. La coulée peut être réalisée grâce à une tête de coulée comme celle décrite par exemple dans la publication de brevet français 2 347 170. Dans une variante, la couche adhésive peut être formée par une pulvérisation du mélange des composants. A cet effet on peut utiliser une pulvérisation centrifuge à l'aide d'un bol tournant à une vitesse comprise entre 1000 et 80 000 tours/min.

En fonction du rôle que doit remplir la couche adhésive dans l'assemblage, on a la possibilité de modifier ses propriétés mécaniques en agissant sur le degré de polymérisation du polyuréthane c'est-à-dire en jouant sur les longueurs de chaînes dudit polymère.

Ainsi lorsque la couche adhésive n'a à remplir que la fonction adhésive, il n'est pas toujours nécessaire d'effectuer une polymérisation totale du polyuréthane telle qu'elle pourrait être théoriquement lorsque la composition de départ contient un initiateur de polymérisation. Dans ce cas on ne fera pas réagir toutes les doubles liaisons éthyléniques des chaînes de polyuréthane.

Cependant, dans le cas général, on effectuera une polymérisation totale ou quasi-totale par un traitement aux U.V. ou par un traitement analogue ou le cas échéant par un traitement thermique. Cette polymérisation garantit le maintien du collage dans le temps.

Si la couche adhésive doit remplir en plus de la fonction adhésive, une fonction d'absorbeur d'énergie, on choisira alors une composition et un procédé de polymérisation qui le cas échéant peut utiliser la chaleur, procurant des chaînes plus longues par greffage de chaînes entre elles au niveau des doubles liaisons éthyléniques. Dans ce cas, avantageusement, la composition de départ comprendra en outre des composants déjà cités des dérivés acryliques choisis par exemple parmi l'acrylate d'hydroxyéthyle, le triméthylolpropanetriacrylate, le trimethylolpropanetriméthacrylate, l'acrylate d'éthyl-2-hexyle, l'acrylate de butyle et de méthyle.

La couche adhésive suivant l'invention peut être utilisée pour la fabrication des stratifiés en verre, en matière plastique, tels le polycarbonate, les polyamides, les acryliques, les polyuréthanes.

Par exemple, la couche adhésive selon l'invention est utilisée pour la fabrication d'un vitrage feuilleté formé de deux feuilles de verre et d'une feuille intercalaire ayant des propriétés d'absorbeur d'énergie dont l'adhésion avec les deux feuilles de verre est assurée de chaque côté par une couche adhésive conforme à l'invention. La feuille intercalaire ayant des propriétés d'absorbeur d'énergie peut être alors en polyvinylbutyral, en chlorure de polyvinyle, en polyuréthane, etc..., et elle n'a pas à présenter en outre des propriétés adhésives particulières comme c'est le cas dans un vitrage feuilleté classique formé uniquement des deux feuilles de verre et de la couche intercalaire.

La couche adhésive peut aussi être utilisée pour coller directement les deux feuilles de verre d'un vitrage feuilleté. Sous une épaisseur de 0,4 mm environ et plus elle peut éventuellement remplir le rôle d'un absorbeur d'énergie.

La couche adhésive selon l'invention peut encore être utilisée pour la fabrication d'un vitrage de sécurité comprenant une feuille de verre, une couche de matière plastique ayant des propriétés d'absorbeur d'énergie (couche AE), une couche antilacérante et autocicatrisable, la couche adhésive assurant la liaison de la feuille de verre avec la couche AE.

La couche adhésive selon l'invention peut encore être utilisée pour la fabrication d'un vitrage de sécurité formé d'un support monolithe ou feuilleté, en verre ou en matière plastique, sur lequel adhère par l'intermédiaire de la couche adhésive, une couche antilacérante et autocicatrisable comme décrite précédemment.

La couche adhésive selon l'invention peut encore être utilisée pour l'assemblage d'une feuille de verre avec une feuille de polycarbonate ou pour l'assemblage d'autres couches de matière plastique.

D'autres avantages et caractéristiques de l'invention apparaîtront dans la description suivante d'exemples de réalisation et d'application de la couche adhésive selon l'invention.

Exemple 1

On prépare un polyuréthane par mélange de 175 g (0,175 mole) d'un polyéther de masse moléculaire 1 000 par exemple le produit commercialisé sous l'appellation POLYMEG 1000, 28,4 g (0,275 mole) de butanediol-1,4, 20,9 g (0,042 mole) d'un polyesterpolyol de masse moléculaire 1 140 et de fonctionnalité comprise entre 2,2 et 2,4. On ajoute 125,1 g (0,45 mole) d'isophorone diisocyanate comprenant 10 % en poids de fonctions urées et 20,1 g (0,1 mole) de m.TMI en présence de 0,02 % en poids de dilaurate de dibutylétain par rapport au poids du polyuréthane et de 3 % en poids d'acétophénone par rapport au poids du composé à liaison éthylénique. On fait réagir à 120 °C durant 2 heures.

Le produit réactionnel est dilué avec de l'acide acrylique pour pouvoir être coulé sur une feuille de verre et former une couche homogène et incolore. Sur la couche formée, on place une seconde feuille de verre et l'ensemble est soumis à un rayonnement électronique suffisamment puissant pour activer au moins une partie des doubles liaisons et augmenter la polymérisation du polyuréthane. Le vitrage feuilleté obtenu présente une bonne qualité optique et une bonne adhésion entre les éléments. Ces propriétés se conservent dans le temps.

Exemple 2

On prépare un polyuréthane par mélange de 201 g (1 mole) de m.TMI, 325 g (0,5 mole) d'un polyétherdiol de masse moléculaire 650, 0,02 % par rapport au poids des deux constituants précédents de dilaurate de dibutylétain en tant que catalyseur, 2,5 % en poids par rapport au poids de composants à liaison éthylénique d'acétophénone en tant que photo-initiateur et 40 parties de triméthylacrylate de trimethylolpropane pour 100 parties des autres composants de polyuréthane.

On chauffe le tout à 80 °C durant 2 heures. Le produit réactionnel est un mono-uréthane. Ce produit est dilué avec de l'acide acrylique et il est étalé sur une feuille de verre pour former une couche d'épaisseur homogène. Sur cette couche on place une seconde feuille de verre et l'ensemble est soumis à un traitement d'irradiation U.V.

Exemple 3

On prépare un polyuréthane par mélange de 201 g (1 mole) de m.TMI avec 180 g (0,33 mole) d'un polycaprolactonetriol de masse moléculaire 540, en présence de 0,02 % en poids de dilaurate de dibutylétain en tant que catalyseur et 2,5 % en poids d'acetophénone par rapport au poids des composants à liaison éthylénique. Après un traitement de 2 heures à 80 °C, on ajoute 20 parties de triacrylate de triméthylolpropane pour 100 parties de produit réactionnel précédent. On étale la composition sur une feuille de verre pour former une couche homogène que l'on recouvre par une seconde feuille de verre. L'ensemble est ensuite soumis à un traitement d'irradiation U.V.

Exemple 4

On mélange 125,1 g (0,45 mole) d'isophorone-diisocyanate (IPDI) comprenant 10 % environ en poids de fonctions urées avec 166,5 g (0,166 mole) d'un polyétherdiol de masse moléculaire 1 000, 25,5 g (0,28 mole) de butanediol-1,4, 111 g (0,1 mole) d'IEM, 18,5 g (... mole) de polyétherdiol de masse moléculaire 1 000, 2,83 (0,031 mole) de butanediol-1,4, en présence de 0,02 % en poids de dilaurate de dibutylétain. On chauffe pendant 2 heures à 80 °C. On ajoute ensuite 20 parties de triméthacrylate de triméthylolpropane pour 100 parties du produit réactionnel précédent. On coule le mélange sur une feuille de verre pour former une couche d'épaisseur homogène qu'on recouvre d'une seconde feuille de verre. On soumet l'ensemble à un traitement par irradiation U.V.

Exemple 5

La composition décrite dans l'exemple 1 apte à former le polyuréthane est coulée sur une feuille de matière plastique formée d'une couche de polyuréthane thermoplastique présentant des propriétés d'absorbeur d'énergie et une couche de polyuréthane thermodurcissable présentant des propriétés d'autocicatrisation, par exemple la feuille décrite dans la publication de brevet européen 0 133 090. Après formation de la couche adhésive, la feuille à trois couches est associée à la température ambiante à une feuille de verre et l'ensemble est soumis à un traitement aux U.V. à travers la feuille de matière plastique. Le vitrage obtenu présente une bonne qualité optique et une bonne adhésion entre les éléments.

Exemple 6

La composition décrite dans l'exemple 4 est coulée sur la feuille de matière plastique décrite dans la publication de brevet européen 0 133 090. La feuille à trois couches obtenue est associée à la température ambiante à une feuille de verre et l'ensemble est soumis à un traitement aux U.V.

Exemple 7

La composition décrite dans l'exemple 1 est pulvérisée sur une feuille de matière plastique formée d'une couche de polyuréthane thermodurcissable présentant des propriétés d'autocicatrisation et d'antilacération. Après formation de la couche adhésive, la feuille à deux couches est associée à la température ambiante à un vitrage feuilleté formé de deux feuilles de verre et d'une couche intercalaire en polyvinylbutyral. L'ensemble est soumis à un traitement aux U.V. à travers la feuille de matière plastique.

Exemple 8

On opère de la même façon que dans l'exemple 7 en utilisant la composition décrite dans l'exemple 4.

**Revendications**

1. Utilisation d'une couche adhésive intercalaire dans la fabrication des vitrages feuilletés en verre et/ou en matière plastique, caractérisée en ce qu'elle comprend un polyuréthane formé à partir d'une composition comprenant un composant isocyanate comprenant au moins un mono-isocyanate présentant une double liaison éthylénique dans sa formule et au moins un diisocyanate aliphatique ou cycloaliphatique, un composant polyol comprenant au moins un polyol choisi parmi les polyétherpolyols ou les polyesterpolyols de masse moléculaire comprise entre 450 et 2 000, les polycaprolactones de masse moléculaire comprise entre 500 et 2 000, les polycarbonatepolyols et les polyesterpolycarbonatepolyols de masse moléculaire comprise entre 1 000 et 2 000, des polybutadiènes à fonction hydroxyle ou carboxyle, au moins un initiateur de polymérisation.

2. Utilisation d'une couche adhésive selon la revendication 1, caractérisée en ce que le composant polyol comprend en outre au moins un diol court de masse moléculaire comprise entre 50 et 200.

3. Utilisation d'une couche adhésive selon une des revendications 1 ou 2, caractérisée en ce que le composant polyol comprend en outre au moins un agent réticulant de fonctionnalité supérieure à 2, tel un triol de masse moléculaire comprise entre 100 et 3 000.

4. Utilisation d'une couche adhésive selon une des revendications 1 à 3, caractérisée en ce que la composition contient au moins un dérivé acrylique en plus du mono-isocyanate.

5. Utilisation d'une couche adhésive intercalaire dans la fabrication des vitrages feuilletés en verre et/ou en matière plastique, caractérisée en ce qu'elle comprend un polyuréthane formé à partir d'une composition comprenant (a) un composant isocyanate comprenant au moins un mono-isocyanate présentant une double liaison éthylénique dans sa formule, (b) un composant polyol comprenant au moins un polyol choisi parmi les polyétherpolyols ou les polyesterpolyols de masse moléculaire comprise entre 450 et 2 000, les polycaprolactones de masse moléculaire comprise entre 500 et 2 000, les polycarbonatepolyols et les polyesterpolycarbonatepolyols de masse moléculaire comprise entre 1 000 et 2 000, des polybutadiènes à fonction hydroxyle ou carboxyle, les polyols de fonctionnalité supérieure à 2 tels les triols de masse moléculaire comprise entre 100 et 3 000, le composant polyol comprenant éventuellement en outre au moins un diol court de masse moléculaire comprise entre 50 et 200, (c) un dérivé acrylique choisi parmi l'acrylate d'hydroxyéthyle, le triméthylolpropanetriacrylate, le triméthylolpropanetriméthacrylate, l'acrylate d'éthyl-2-hexyle, l'acrylate de butyle et de méthyl et (d) au moins un initiateur de polymérisation.

6. Utilisation d'une couche adhésive selon une des revendications 1 à 5, caractérisée en ce que le mono-isocyanate présentant une double liaison éthylénique est choisi parmi le méta-isopropenyl-α,α-diméthylbenzylisocyanate et l'isocyanatoéthylméthacrylate.

7. Utilisation d'une couche adhésive selon une des revendications 1 à 6, caractérisée en ce que l'initiateur de polymérisation est un photo-initiateur.

8. Vitrage feuilleté comprenant au moins une couche adhésive selon une des revendications 1 à 7.

9. Vitrage feuilleté selon la revendication 8, caractérisé en ce qu'il comprend un support monolithique ou feuilleté et une couche antilacérante et autocicatrisable adhérant au support par l'intermédiaire de la couche adhésive.

10. Vitrage feuilleté selon la revendication 8, caractérisé en ce qu'il comprend un support monolithique ou feuilleté et une feuille à deux couches de polyuréthane, une couche antilacérante et autocicatrisable et une couche ayant des propriétés d'absorbeur d'énergie, adhérant au support par l'intermédiaire de la couche adhésive.

## Claims

1. Use of an intermediate adhesive layer in the manufacture of laminated panes of glass and/or of plastics material, characterized in that the layer comprises a polyurethane formed from a composition comprising an isocyanate component comprising at least one monoisocyanate having an ethylenic double bond in its formula and at least one aliphatic or cycloaliphatic diisocyanate, a polyol component comprising at least one polyol selected from among the polyether polyols or the polyester polyols of molecular weight lying between 450 and 2,000, the polycaprolactones of molecular weight between 500 and 2,000, the polycarbonate polyols and the polyester polycarbonate polyols of molecular weight between 1,000 and 2,000, polybutadienes having a hydroxyl or carboxyl function and at least one polymerisation initiator.

2. Use of an adhesive layer according to Claim 1, characterized in that the polyol component comprises, in addition, at least one short diol of molecular weight between 50 and 200.

3. Use of an adhesive layer according to one of Claims 1 or 2, characterized in that the polyol component comprises, in addition, at least one cross-linking agent having a functionality greater than 2, such as a triol of molecular weight between 100 and 3,000.

4. Use of an adhesive layer according to one of Claims 1 to 3, characterized in that the composition contains at least one acrylic derivative in addition to the monoisocyanate.

5. Use of an intermediate adhesive layer in the manufacture of laminated panes of glass and/or of plastics material, characterized in that the layer comprises a polyurethane formed from a composition comprising (a) an isocyanate component comprising at least one monoisocyanate having an ethylenic double bond in its formula, (b) a polyol component comprising at least one polyol selected from among the polyether polyols or the polyester polyols of molecular weight between 450 and 2,000, the polycaprolactones of molecular weight between 500 and 2,000, the polycarbonate polyols and the polyester polycarbonate polyols of molecular weight between 1,000 and 2,000, polybutadienes having a hydroxyl or carboxyl function, polyols having a functionality greater than 2, such as triols of molecular weight between 100 and 3,000, the polyol component comprising, possibly in addition, at least one short diol of molecular weight between 50 and 200, (c) an acrylic derivative chosen from among hydroxyethyl acrylate, trimethylol propane triacrylate, trimethylol propane trimethacrylate, ethyl-2-hexyl acrylate, butyl acrylate and methyl acrylate and (d) at least one polymerisation initiator.

6. Use of an adhesive layer according to one of Claims 1 to 5, characterized in that the mono-isocyanate having an ethylenic double bond is selected from among meta-isopropenyl-α,α-dimethyl benzyl isocyanate and isocyanatoethyl methacrylate.

7. Use of an adhesive layer according to one of Claims 1 to 6, characterized in that the polymerisation initiator is a photo-initiator.

8. Laminated pane comprising at least one adhesive layer according to Claims 1 to 7.

9. Laminated pane according to Claim 8, characterized in that it comprises a monolithic or laminated support and an anti-laceration and self-healing layer adhering to the support through the intermediary of the adhesive layer.

10. Laminated pane according to Claim 8, characterized in that it comprises a monolithic or laminated support and a sheet comprising two layers of polyurethane, an anti-laceration and self-healing layer and a layer having energy-absorber properties, adhering to the support through the intermediary of the adhesive layer.

## Patentansprüche

1. Verwendung einer klebenden Zwischenschicht bei der Herstellung von Verbundglas aus Glas und/oder Kunststoff, dadurch gekennzeichnet, daß sie ein Polyurethan aufweist, das aus einer Komposition gebildet ist, die einen Isocy-

anatbestandteil umfaßt, der wenigstens ein Monoisocyanat mit einer Ethylendoppelbindung in seiner Formel und wenigstens ein aliphatisches oder cycloaliphatisches Diisocyanat aufweist, einen Polyolbestandteil umfaßt, der wenigstens ein Polyol aus der Gruppe der Polyetherpolyole oder Polyesterpolyole mit einem Molekulargewicht von zwischen 450 und 2 000, der Polycaprolactone mit einem Molekulargewicht von zwischen 500 und 2 000, der Polycarbonatpolyole und der Polyesterpolycarbonatpolyole mit einem Molekulargewicht von zwischen 1 000 und 2 000, Polybutadiene mit Hydroxyl- oder Carboxylgruppe und wenigstens einen Polymerisationsinitiator aufweist.

2. Verwendung einer Klebeschicht nach Anspruch 1, dadurch gekennzeichnet, daß der Polyolbestandteil ferner wenigstens ein kurzes Diol mit einem Molekulargewicht von zwischen 50 und 200 aufweist.

3. Verwendung einer Klebeschichtht nach Anspruch 1 oder 2, dadurch gekennzeichnet, daß der Polyolbestandteil ferner wenigstens ein Vernetzungsmittel mit einer Funktionalität von mehr als 2, wie etwa ein Triol mit einem Molekulargewicht von zwischen 100 und 3 000, aufweist.

4. Verwendung einer Klebeschicht nach Anspruch 1 bis 3, dadurch gekennzeichnet, daß die Komposition wenigstens ein Acrylderivat zusätzlich zu dem Monoisocyanat enthält.

5. Verwendung einer klebenden Zwischenschicht bei der Herstellung von Verbundglas aus Glas und/oder Kunststoff, dadurch gekennzeichnet, daß sie ein Polyurethan umfaßt, das aus einer Komposition gebildet ist, die (a) einen Isocyanatbestandteil umfaßt, der wenigstens ein Monoisocyanat mit einer Ethylendoppelbindung in seiner Formel aufweist, (b) einen Polyolbestandteil umfaßt, der wenigstens ein Polyol aus der Gruppe der Polyetherpolyole oder Polyesterpolyole mit einem Molekulargewicht von zwischen 450 und 2 000, der Polycaprolactone mit einem Molekulargewicht von zwischen 500 und 2 000, der Polycarbonatpolyole und der Polyesterpolycarbonatpolyole mit einem Molekulargewicht von zwischen 1 000 und 2 000, Polybutadiene mit Hydroxyl- oder Carboxylgruppe, Polyole mit einer Funktionalität von mehr als 2, wie etwa Triole mit einem Molekulargewicht von zwischen 100 und 3 000 aufweist, wobei der Polyolbestandteil gegebenenfalls ferner wenigstens ein kurzes Diol mit einem Molekulargewicht von zwischen 50 und 200 enthält, (c) ein Acrylderivat aus der Gruppe Hydroxylethylacrylat, Trimethylolpropantriacrylat, Trimethylolpropantrimethacrylat, Ethyl-2-hexyl-Acrylat, Butyl- und Methyl-Acrylat, und (d) wenigstens einen Polymerisationsinitiator enthält.

6. Verwendung einer Klebeschicht nach einem der Ansprüche 1 bis 5, dadurch gekennzeichnet, daß das eine doppelte Ethylenbindung aufweisende Monoisocyanat aus Metaisopropenyl-α,α-dimethylbenzylisocyanat und Isocyanatethylmethacrylat ausgewählt ist.

7. Verwendung einer Klebeschicht nach einem der Ansprüche 1 bis 5, dadurch gekennzeichnet, daß der Polymerisationsinitiator ein Photoinitiator ist.

8. Verbundglas mit wenigstens einer Klebeschicht nach einem der Ansprüche 1 bis 7.

9. Verbundglas nach Anspruch 8, dadurch gekennzeichnet, daß es einen monolithischen oder laminierten Träger und eine an dem Träger mittels der Klebeschicht haftende reißfeste und selbstheilende Schicht aufweist.

10. Verbundglas nach Anspruch 8, dadurch gekennzeichnet, daß es einen monolithischen oder laminierten Träger und eine Zweischichtenfolie aus Polyurethan, eine reißfeste und selbstheilende Schicht und eine Schicht mit energieabsorbierenden Eigenschaften aufweist, die an dem Träger mittels der Klebeschicht anhaften.